# EUROPEAN PATENT APPLICATION

(11) **EP 1 903 347 A1**
(43) Date of publication of application: **26.03.2008**
(21) Application number: 06425769.4
(22) Date of filing: 10.11.2006
(51) Int. Cl.: G01S 1/68, G01S 11/06, G08B 13/14

(54) **Device for controlling personal belongings**

(30) Priority: 25.09.2006 IT AR20060011 U; 27.09.2006 IT AR20060012 U
(71) Applicant: Porro, Marco, 52048 Monte S. Savino AR (IT); Porro, Flavio, 21040 Uboldo VA (IT)
(72) Inventor: Porro, Marco, 52048 Monte San Savino (Arezzo) (IT); Porro, Flavio, 21040 Uboldo (Varese) (IT)
(74) Representative: Lunati, Vittoriano

(57) **Abstract**

Device for controlling personal belongings and the like, of the type comprising at least one emitter unit (2) for emitting an electromagnetic signal and a receiver device (3) for receiving said electromagnetic signal, the emitter unit (2) being connectable to one of said items (15) and the receiver device (3) being mobile and suitable for being manually transported, and comprising signalling means (6) suitable for signalling that a distance threshold value between the receiver device (3) and the emitter unit (2) has been exceeded, the receiver device (3) being integrated with a mobile phone and suitable for identifying the emitter unit (2).

## Description

The present invention concerns a device for controlling personal belongings and the like, in particular small items or items that can be carried by a user, as specified in the preamble of the first claim.

Nowadays in their daily lives people use various small items that have become essential.

For example, car and/or house keys, mobile phones, wallets, watches, spectacles, pens, diaries, computer memories, palm computers, small work tools, small packets of tablets, and other items.

Said items are in the main small and can be contained in pockets or bags.

Furthermore said items are essential only at certain times of the day, while at other times they are not used by their owner.

Due to the features of the items indicated, it frequently happens that the user forgets to take with him/her one or more items, thus he/she is in difficulty when they are required.

This problem could be substantially solved by placing all said items permanently in a bag, briefcase or rucksack. However, the user does not always have to or wish to carry with him/her all said items and furthermore the use of a bag or similar is often inconvenient.

Users often use mnemonic stratagems to try to avoid said problem. These stratagems, however, do not always work and furthermore require e mental effort.

In this situation the technical aim of the present invention is to provide a control device that can substantially solve the above mentioned drawbacks.

Within said technical aim an important purpose of the invention is to obtain a control device able to signal whether one or more of said items has been forgotten or mislaid.

The technical aim and the set purposes are achieved by a device for the control of personal belongings and the like, according to the attached Claim 1.

Preferred embodiments are highlighted in the sub-claims.

Further features and advantages of the invention are better explained below by the detailed description of a preferred embodiment of the invention, with reference to the attached drawings, wherein:

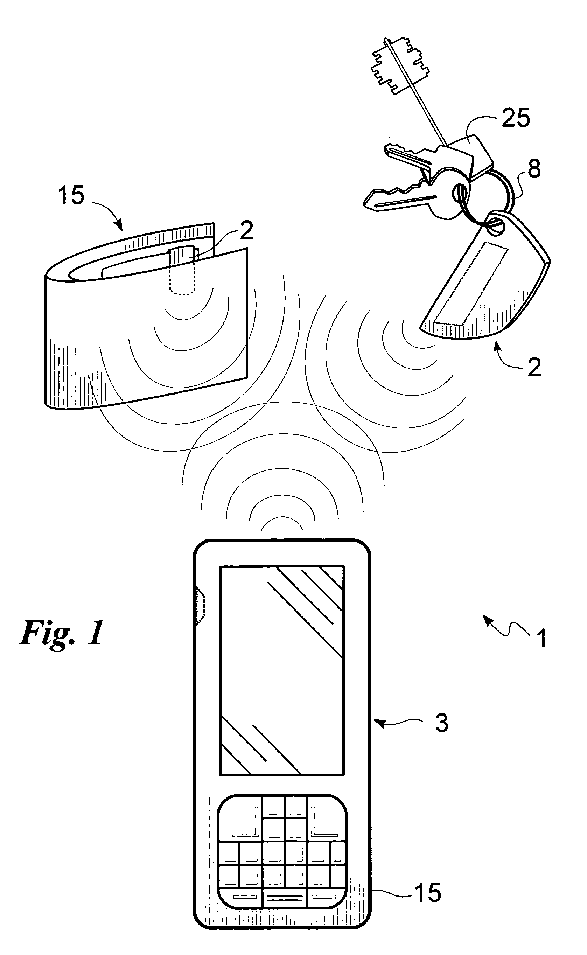

**Fig. 1** schematizes the device according to the invention;
**Fig. 2a** shows a block diagram of a first embodiment of the invention;
**Fig. 2b** presents a block diagram of a second embodiment of the invention;
**Fig. 3** shows a first portion of the device according to the invention; and
**Fig. 4** is a second portion of the device according to the invention.

With reference to the above Figures, the device according to the invention is indicated overall by number **1.**

It is suitable for controlling and if necessary identifying the reciprocal proximity or otherwise of some items **15,** in particular items 15 that are small but very useful, previously referred to, for example: car keys, house keys, remote controls for opening doors and gates, mobile phones, wallets, documents, cards and credit cards, watches, spectacles, pens, diaries, computer memories, palm computers, small work tools, packets of tablets or medicines, cameras, bags, briefcases and other.

The device 1 comprises basically at least one emitter unit **2** emitting an electromagnetic signal that can be connected to an item.

It is very small, in the order of a few centimetres, in order not to excessively alter the size of the item 15 to which it is connected, and comprises means for emission **4** of electromagnetic waves.

The device 1 furthermore comprises a receiver device **3** for receiving the electromagnetic signal, mobile and suitable for being manually transported, and comprising reception means **5,** suitable for receiving the electromagnetic signal emitted by the units 2, and signalling means **6** suitable for signalling a reciprocal distance of the receiver device and at least one of the emitter units 2 greater than at least one threshold value.

The reception means 5 or the signalling means 6 can be activated or deactivated on command.

The electromagnetic signal preferably has a frequency between 2 and 3 GHz. It is therefore a signal consisting of radio waves.

In particular there are radio signals with frequency around 2.65 GHz, known under the Bluetooth brand.

Said signals are today used for aerial connections between different electronic devices and the like, for example for connection of computer peripherals to the computer itself and of mobile phone peripherals, such as headsets, handsfree devices and the like, to the mobile phones themselves.

Furthermore the technology based on the Bluetooth signals is today known and highly developed. In particular various small-size devices are present on the market able to emit, receive and decode electromagnetic waves at the frequencies indicated.

**Many small headsets for mobile phones are known, based on the Bluetooth** technology.

For example the headsets produced by Motorola under the name "H5 Miniblue Bluetooth Wireless Headset" weighs approximately 7.3 g, measures approximately 41 x 41 x 33 mm and is able to emit and receive electromagnetic signals, decode them, process them and emit acoustic signals.

Another example is a Bluetooth device produced by Murata Electronics known under the brand "Blue Module" with dimensions of 9.3 x 7.8 x 1.8 mm.

The Bluetooth technology permits reciprocal connection of devices a short distance from each other. Said distance is between approximately one metre and approximately 100 m and varies according to the signal emission power and other parameters.

The radio waves in the frequency ranges indicated are furthermore able to overcome obstacles, in particular walls, ceilings and other, and are propagated simultaneously in all directions in space.

The receiver device 3 is therefore able to receive the electromagnetic signal of units 2 and to signal, via the signalling means 6, information coming from the device 3.

In particular the receiver means 5 comprise an electronic circuit, or similar, able to identify and process the electromagnetic signals coming from said units 2.

The receiver means 5 are therefore suitable for detecting at least partly the distance of the electromagnetic signal and for identifying the unit 2 emitting said electromagnetic signal.

In particular the receiver means 5 are able to detect whether the distance between the same means 5 and a unit 2 has exceeded the threshold value constituted by the presence or absence of the electromagnetic signal emitted by one particular unit 2.

The presence of the electromagnetic signal indicates that the device 3 is in the operating range of the signal emitted by the emitter unit 2, while the absence thereof means that the distance between the device 3 and the unit 2 is greater than the operating range of the signal emitted by the unit 2 itself.

In the case of a Bluetooth signal, the threshold value varies according to the power of the emissions in an interval substantially between 1 m and 100 m.

Similar receiver means are normally present on mobile phones provided with Bluetooth function, which detect the presence of the radio waves of a device, which is also Bluetooth, and signal it to the user on the screen.

An example of this is the mobile phone produced by Samsung and sold under the name SGH-Z510 which detects, for example, the presence of the Handsfree Bluetooth Cellular Line BTPP4 device and signals it on the screen.

The signalling means 6 comprise an acoustic diffuser **6a** and a display system **6b** for displaying the electromagnetic signals, electrically connected to the receiver means 5.

They are suitable for signalling at least that said threshold value of the reciprocal distance between unit 2 and device 3 has been exceeded.

In particular exceeding of said threshold value can be signalled by the acoustic diffuser 6a, which could emit a particular sound, preferably continuous and selectable, or by visual sensors, which can emit a particular light, or again by a system of vibration of the device 3 or other.

Furthermore the display system 6b, preferably consisting of an LCD screen or similar, signals preferably the identity of the unit 2 that has exceeded said threshold value.

The receiver device 3 furthermore comprises preferably second means of emission **7** of electromagnetic waves, preferably of the same type as the emission means 4 of the units 2 and suitable for emitting electromagnetic waves.

Lastly, the device 3 can be integrated with an item 15, in particular with an electronic device consisting of a mobile phone, a PDA or palm computer or other.

Many of said electronic devices are already provided with means for receiving, processing, emitting and displaying an electromagnetic signal, in particular a Bluetooth signal. A simple modification to the software or firmware of the electronic device is therefore sufficient to permit the production of a device 3 according to the invention.

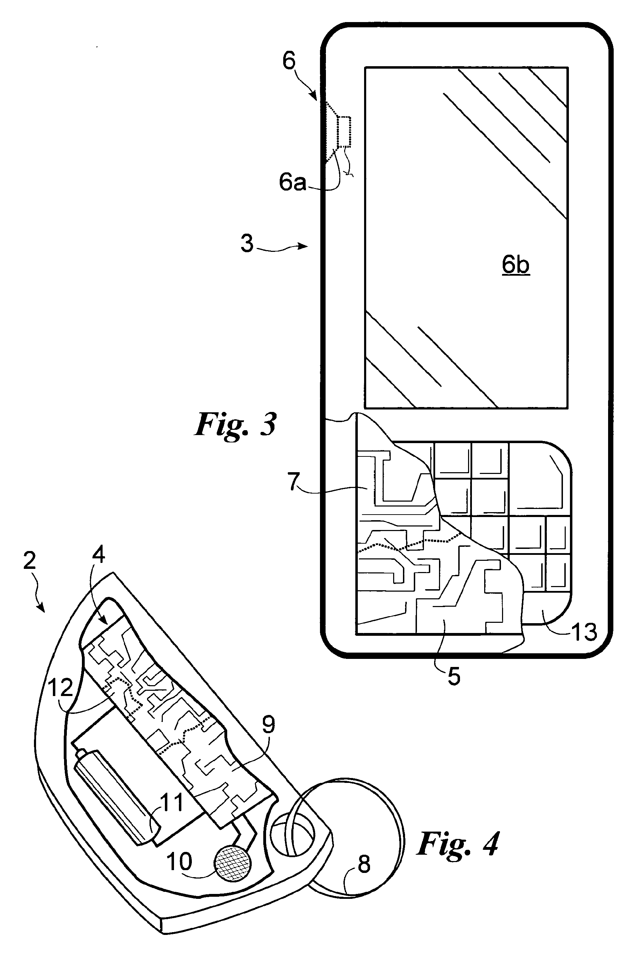

Fig. 3 schematically shows a device 3 integrated in a mobile phone.

In said figure the means of emission 7 and reception 5 are shown schematically by an electronic board, imaginarily, and for the purpose of representation, divided into several portions.

The emitter units 2 are provided with a substantially closed self-supporting shell, which can be connected to an item 15 in a removable manner. Said shell can have different shapes and colours.

In said regard the emitter units 2 are provided with a connection mechanism **8,** preferably of mechanical or magnetic type.

They are schematically and representatively illustrated in Fig. 4.

The shells of the emitter units 2 can have different shapes and functions and the connection mechanisms 8 can be constituted in various ways.

For example said connection mechanisms can consist of clips, key rings, pendants, banknote clips, adhesive elements, magnetic elements and other. As previously mentioned, each emitter unit 2 comprises means for emission 4 of electromagnetic waves suitable for transmitting, continuously or intermittently, at least one presence signal to the device 3.

As specified, the presence or absence of the signal emitted by the unit 2 determines whether the threshold value of the reciprocal distance between unit 2 and device 3 is exceeded or not.

Preferably the units 2 comprise second reception means **9** analogous to the reception means 5 of the device 3 and suitable for receiving and processing the signal coming from the second emission means 7 of the device 3.

In said case the unit 2 comprises preferably second signalling means **10,** suitable for signalling at least that said threshold value of the reciprocal distance between unit 2 and device 3 has been exceeded.

The second signalling means 10 consist preferably of acoustic means.

The unit 2 furthermore comprises preferably an electric battery **11,** suitable for supplying electricity to the emission means 4, to the second reception means 9 and to the second signalling means 10.

Alternatively the unit 2 could be electromagnetic induction charged by appropriate second signalling means 10.

In said case the emission means 2 could consist of a known RFID.

The battery 11 is of known type and appropriately coupled to a control element **12** for controlling charging of the same. Said control element is suitable for identifying the charge level of the battery 11, in particular it is suitable for detecting whether the battery 11 is running low. Said function is known and is performed for example via control of the variation in voltage of said battery 11.

The control element 11 appropriately communicates with the emission means 4 which communicate with the device 3.

Said device 3 signals, in turn, via the signalling means 6, that the electric battery 11 is running low.

Lastly the device 3 comprises control means **13,** suitable for permitting activation of the second signalling means 10 and furthermore adjustment of the same units 2.

The operation of a device 1 for controlling items 15, structurally described above, is as follows.

The units 2 are connected, by means of the connection mechanisms 8, to the required items 15, in particular to the items 15 commonly used which must not be forgotten during the day, for example wallet, keys and the like.

Furthermore an item 15, appropriately consisting of a mobile phone, is preferably integrated with the receiver device 3.

The device 3 and the units 2 therefore constitute a network which permits verification of the reciprocal distance of the items 15.

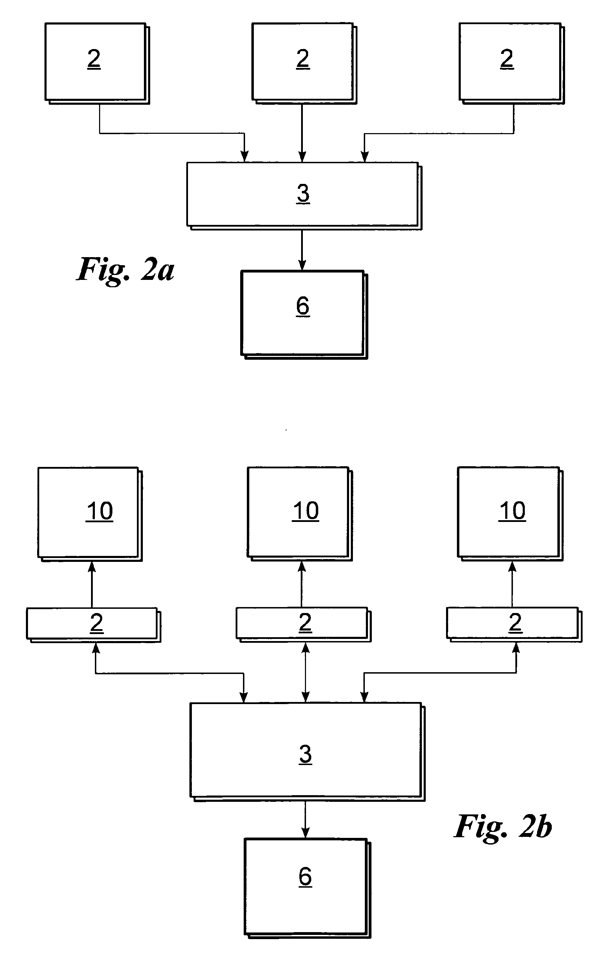

The situation is illustrated in Fig. **2a** and **2b.**

In particular Fig. 2a illustrates the operation of the network of items 15 to which two units 2 and the device 3 are connected. All the units 2 communicate with the device 3 provided with signalling means 5.

If a unit 2 is beyond the threshold distance, the device 3 does not detect the presence thereof and therefore signals its absence.

It is not necessary for the units 2 or the device 3 to emit signals continuously, in fact it is sufficient for them to emit signals at certain frequencies, preferably adjustable and higher than one impulse signal per minute, more preferably higher than one signal every thirty seconds.

The device 1 is therefore useful if, for example, a user has left an item 15 provided with unit 2 at home and has forgotten to take it with him/her when he/she goes out.

In said case, after the user has covered a distance greater than the threshold distance, the device 3 signals, via a sound or similar, absence of the signal of unit 2 and displays absence of the item 15 and its identity. At this point the user can quickly return home and get the item 15 or can decide to switch off the reception means 5 if he/she does not wish to recover the forgotten item.

Fig. 2b illustrates operation of the network of items 15 to which the unit 2 and device 3 are connected, if the units 2 comprise second reception means 9 and second signalling means 10 and the device 3 comprises second emission means 7.

In this case all the items 15, by means of the units 2 or the device 3, communicate with one another and at least one item is able to signal that the threshold value of other units 2 or the device 3 has been exceeded.

In this case, if the user has forgotten the device 3, all the items 15 provided with unit 2 which the user has with him/her signal, by means of acoustic signals, that the distance threshold value has been exceeded.

Preferably only device 3 comprises a display system, however. Therefore only device 3 is able to indicate the identity of the unit 1.

Furthermore the name that identifies the units 2 is appropriately adjustable by said user via the control means 13, so that the user can immediately identify the item 15 to which the unit 2 is connected.

The device 3 furthermore signals preferably not only when the threshold value has been exceeded but also other distance values.

The reciprocal distance of the device 3 and the units 2 can be detected by measurement of the signal intensity, which, as it is known, varies with the square of the distance. In said case the threshold value is appropriately selectable via the control means 13 of the device 3.

Via the control means 13 it is also possible to activate or de-activate the sound or the signal of the various units 2. Furthermore it is possible to select a period of time after which the units 2, and if necessary the device 3, no longer signal that the distance threshold value has been exceeded.

The device 3 then signals that the batteries 11 of the units 2 are running low, so as to eliminate the possibility of the device signalling the absence of a unit 2 due to insufficient electrical power.

Lastly, the device 3 permits rapid retrieval of items 15 provided with units 2. It is sufficient for the same to activate the second signalling means 10 via the control means 13 for the acoustic signal of unit 2 to be easily traced.

The invention comprises a new use of an emitter unit 2 and a device 1, previously described.

In particular the unit 2 is used as an auxiliary element of a personal item 15.

It is unusually combined with a personal item 15 of the type described.

Said unit is used in particular to control the reciprocal distance of the receiver device 3 and of the units 2, and in particular exceeding of the reciprocal distance threshold value.

The device 1 is also used to control the reciprocal distance of the receiver device 3 and the units 2, and in particular exceeding of the reciprocal distance threshold value.

The invention achieves important advantages.

The device 1 is able to signal whether one or more of said items 15 has been forgotten or mislaid and furthermore is able to identify which item 15 has been mislaid.

A further advantage is given by the fact that the device 1 is able to prevent theft or mislaying of said items 15.

Furthermore the device 1 is not bulky: the device 3 is integrated with an item 15, while the units 2 are so compact that they do not constitute a problem even for small items 15.

Lastly, the device 1 permits rapid retrieval of mislaid items 15 via the second signalling means 10.

## Claims

1. Device for controlling personal belongings and the like, of the type comprising at least one emitter unit (2) for emitting an electromagnetic signal and a receiver device (3) for receiving said electromagnetic signal, **characterised in that** said emitter unit (2) can be connected to one of said items (15) and **in that** said receiver device (3) is mobile and suitable for being manually transported, and comprises signalling means (6) suitable for signalling that at least one distance threshold value between said receiver device (3) and said emitter device (2) has been exceeded, said receiver device (3) being suitable for identifying said emitter device (2).

2. Device according to claim 1, wherein said receiver device (2) is integrated with a mobile phone.

3. Device according to claim 1, wherein said emitter device (2) comprises a removable shell that can be combined with one of said items (15) comprising a connection mechanism (8) suitable for connecting said unit (2) to one of said items (15).

4. Device according to claim 1, wherein said emitter unit (2) and said receiver device (3) are suitable both for transmitting and receiving said electromagnetic signal.

5. Device according to claim 1, wherein said emitter unit (2) comprises second signalling means (10) suitable for signalling a distance from said receiver device (3) greater than said threshold value.

6. Device according to claim 1, wherein said electromagnetic signal has a frequency of between 2 and 3 GHz.

7. Device according to claim 6, wherein said electromagnetic signal has a frequency around 2.6 GHz.

8. Device according to claim 1, wherein said receiver device (3) is suitable for signalling the distance from said emitter unit (2).

9. Emitter unit of the type suitable for emitting an electromagnetic signal comprising transmission means (4) and reception means (10) suitable for communicating with a receiver device (3), **characterised in that** it comprises signalling means (11) suitable for signalling that at least one threshold value of the distance from said receiver device (3) has been exceeded.

10. Emitter unit according to claim 9, comprising a removable shell that can be combined with one of said items (15) comprising a connection mechanism (8) suitable for connecting said unit (2) to one of said items (15).

11. Unit according to claim 10, wherein said electromagnetic signal has a frequency around 2.6 GHz.

12. Use of an emitter unit (1) according to one or more of the claims from 1 to 11 as an auxiliary element for a personal item (15).

13. Use according to claim 12, to signal that a distance threshold value between one of said items (15) and said receiver device (3) has been exceeded.
